# EUROPEAN PATENT SPECIFICATION

(11) **EP 4 363 194 B1**
(45) Date of publication and mention of the grant of the patent: **09.07.2025**
(21) Application number: 21739791.8
(22) Date of filing: 29.06.2021
(51) Int. Cl.: B29C 49/64, B29C 49/78, B29C 49/06, B29K 67/00, B29K 23/00, B29L 31/00

(54) **METHOD OF BLOW MOLDING USING A CLOSED-LOOP OVEN SYSTEM**
VERFAHREN ZUM BLASFORMEN MIT EINEM GESCHLOSSENEN OFENSYSTEM
PROCÉDÉ DE MOULAGE PAR SOUFFLAGE UTILISANT UN SYSTÈME DE FOUR EN BOUCLE FERMÉE

(43) Date of publication of application: 08.05.2024
(73) Proprietor: Discma AG, 6331 Hünenberg (CH)
(72) Inventor: SIERADZKI, Richard, Frankfort, Illinois 60423 (US)
(74) Representative: Maidment, Marc
(86) International application number: PCT/IB2021/055815
(87) International publication number: WO 2023/275593

(56) References cited:
- EP-A2- 3 033 215
- AT-U1- 521
- US-A- 4 407 651
- US-A1- 2004 024 560
- US-B1- 6 620 352

## Description

### FIELD OF THE INVENTION

The present technology relates to systems and processes for producing a plurality of preforms having a plurality of temperature profiles, including where such preforms can be subjected to blow molding processes.

### BACKGROUND OF THE INVENTION

This section provides background information related to the present disclosure which is not necessarily prior art.

Various products are distributed in plastic containers, such as containers formed from one or more polymers. Common polymers used to form containers include polyesters, such as polyethylene terephthalate (PET), high and low density polyethylenes (PE), polypropylenes (PP), and polycarbonates (PC), among others. Plastic containers can be made using various blow molding processes including injection blow molding, liquid or hydraulic blow molding, and extrusion blow molding, where such blow molding processes can employ a preform that is expanded by a fluid to form a resultant container.

Injection blow molding can be used to form certain plastic containers in one or more stages and can include use of a stretch rod. In a two-stage injection stretch blow molding process, a polymer can be first molded into a preform using an injection molding process. The preform can include the neck and finish of the container to be formed, which can include threading thereon, and a closed distal end. The preform can then be heated above the polymer glass transition temperature, optionally stretched longitudinally with a stretch rod, and blown using high-pressure gas (e.g., air) into a container conforming to a mold. As the preform is inflated, it elongates and stretches, taking on the shape of the mold cavity. The polymer solidifies upon contacting the cooler surface of the mold and the finished hollow container is subsequently ejected from the mold.

Liquid or hydraulic blow molding can form and fill a container in a single operation. A liquid product can be used to form and fill a polymeric preform within a mold into a resultant container, where the liquid product remains thereafter in the finished container. A heated preform, much like the preform used in injection blow molding, can be placed within the mold, optionally stretched, and rapidly filled using a liquid product instead of a gas to form a container therefrom. Combination of the forming and filling steps can therefore optimize packaging of a liquid product by eliminating the transport of empty containers and time demands related to subsequent filling operations.

Various types of preforms can be used in such blow molding processes. Certain embodiments of preforms include injection-molded, rotationally symmetric preforms that have an elongated, cylindrical, lateral body section, a rounded, closed bottom, and a neck section with an upper opening. Other preforms have be rotationally asymmetric with a varying thickness along an elongate axis to facilitate a material distribution that forms an asymmetric container. In either case, positioned proximate to the opening, there can be an outer threaded finish section, which can be delimited toward a bottom thereof by a collar or the like. The threaded finish section can be preserved during blow molding of the preform where the finish can form a thread for a screw cap of a finished beverage container, for example. The remaining portion of the preform, in contrast, can be deformed and stretched during the blow molding process. Preforms can be heated to predefined temperatures in order to enable blow molding in the desired manner. Heating can be performed by various means, including infrared radiation using an infrared oven, to effect defined and/or uniform temperature control of the preforms.

In particular, the polymeric material of the preform (e.g., PET) can be of such a nature that the polymer can strain harden as the polymer is stretched. Forming temperature during the blow molding process can therefore be a determinative factor in the resultant container. The strain hardening effect can be taken into consideration in the production of PET containers for the purpose of controlling and optimizing wall thickness distribution. Depending on the production process, it can be possible to apply heat via infrared radiation in such a way that the preforms are heated according to a temperature profile. In this manner, the warmer sections of the preform can be deformed with priority over other parts as long as is required for the stretching resistance resulting from strain hardening to become greater than the resistance of the adjacent cooler sections, for example. The temperature profile can be uniformly distributed around the circumference of the preforms and can vary process-dependently along the longitudinal axis of the preforms. In order to apply the desired temperature profile to the preforms, use a number of heating zones can be used, for instance up to nine or more zones. It is possible to control the plurality of different heating zones individually, whereby the selected setting is maintained constant over a longer period of operating the heating apparatus.

Preforms of different construction can require different heating regimens in preparation for blow molding into resultant containers. For example, preforms of different sizes, shapes, thicknesses, formed of or including different polymers or polymer combinations, layers, and the like can each have a predetermined temperature profile optimized for a particular blow molding process. Certain examples include different heating regimens for effecting different temperature profiles for PET preforms versus PP preforms. Other examples include different heating regimens for effecting the same temperature profile, but where the preforms have different characteristics that require different regimens to achieve the same temperature profile; e.g., preforms formed of the same material but having different thicknesses. Accordingly, various heating parameters can be tailored for particular preforms, including the number of heating zones, the temperature of certain heating zones, the exposure time to certain heating zones, and the like.

A blow molding system can often include a preform heating means in close proximity thereto, where heated preforms can be passed to a mold in short order and formed into resultant containers before a desired temperature profile of the preforms changes. A travel path of a preform through an infrared oven, for example, can be tailored to generate a predetermined temperature profile in a given preform. However, if a condition of the blow molding system and/or process is changed, it can be necessary to change the preform path or heating means to adapt to a new temperature profile for a given preform. Changes in blow molding conditions can include the use of another preform type, a change in the mold, changes in blow molding parameters, and the like. Accordingly, it can be difficult to adapt a blow molding system and/or process to changing conditions that require changes in preform temperature profiles while maintaining continuous or high throughput production of containers. Oftentimes, one or more settings may need to be changed, one or more new equilibriums reached, and one or more physical parameters may need to be adapted in the blow molding system in order to accommodate preforms having different characteristics.

US2004024560A1 discloses a method for determining the temperature distribution throughout the thickness of a preform used in a container reheat stretch blow molding process by measuring the outside surface temperature of a preform or series of preforms at least two times during the period the preform is cooling down after exiting the heat station and before entering the blow molding station in the blow molding machine and calculating the temperature distribution throughout the thickness of the preform based upon the measured outside surface temperatures using an algorithm.

US6620352B1 discloses a method for inspecting the material distribution of a sequence of stretch blow molded containers or other articles in a continuous production process, by providing injection molded parisons, each parison having at least one indicator, typically two or more indicators, for detecting material distribution at a predetermined position along the axial extent of the parison. Each of the parisons is subjected to a heating stage in the continuous production process, generally by exposure to infrared heating. Each heated parison is then subjected to a blow molding process, which can be a stretch blow molding process, so that each material distribution indicator is transformed to a corresponding position along the axial extent of the blow molded article. A detector is positioned to detect the location of each indicator on each blow molded article from a given mold in the production process. A computation is then made to determine for each blow molded article a material distribution outcome or profile based on the detected locations of each indicator. This information on material distribution is them matched to a prescribed profile for the particular container design and any discrepancy beyond some preset tolerance value is employed to reject the out of tolerance item from the production line, and to modify a step of the manufacturing process such as the infrared heating pattern.

AT521U1 discloses a method for adjusting process parameters in the production of hollow bodies from tubular, thermoplastic preforms, in particular in a stretch blow molding machine, wherein the preforms are heated in a heating device and, after homogenization and measurement of the temperature of the preforms, these are formed into hollow bodies in a blow molding device by introducing a gas under excess pressure.

US4407651A discloses a heating system and process for reheating preforms prior to delivering the preforms to a blow molder. The heating system utilizes different types of heating units, one of which will heat the preform wall more highly at the interior surface and the other of which will heat the preform wall at the exterior surface. By effectively controlling the heat input to a preform from each heating unit and by controlling the outputs of the different heating units in combination, the desired temperature profile through the preform wall may be obtained substantially without any time in the oven being provided for heat equilibration and at the same time a maximum heating effort may be effected to produce the necessary heating of a preform within a minimal time and uniformly.

EP3033215A2 discloses systems and methods for controlling the operation of a blow molder. An indication of a crystallinity of at least one container produced by the blow molder may be received along with a material distribution of the at least one container. A model may be executed, where the model relates a plurality of blow molder input parameters to the indication of crystallinity and the material distribution and where a result of the model comprises changes to at least one of the plurality of blow molder input parameters to move the material distribution towards a baseline material distribution and the crystallinity towards a baseline crystallinity. The changes to the at least one of the plurality of blow molder input parameters may be implemented.

Absent appropriate temperature control, a heated preform may have an improper material distribution and/or expansion during a blow molding operation and the resulting container may rupture (or "blowout") or otherwise fail an aesthetic inspection. For refined gas blow molding processes, it can be expected that from about 1500 to about 2500 containers per one million gas blow molded container will suffer from a blowout. The expected blowouts from a liquid blow molded container is roughly the same. In the instance of liquid blow molding, a blowout will result in more than escape of air and will result in an escape and possible waste of the liquid product to fill the container. When the blow molding liquid is water, a blowout may result in little more than wasted water and negligible down time to allow the blow molding equipment to dry. When the blow molding liquid is a petroleum product, medicine, or cosmetic, for example, a blowout can result in a significant of time due to cleaning procedures required to render the blow molding equipment once-again operational and can result in wasted and unusable product, each of which alone may create a significant economic impact on the blowing molding process and product cost but combined may render the liquid blow molding process economically unfeasible for packing the product. It would be desirable to develop a method of blow molding that would reduce the expected blowouts for a blow molding operation (liquid or gas) to about 25 blowouts per million containers formed.

In consideration of these issues, the present technology provides a method of measuring and monitoring preforms during a heating thereof to minimize blowouts during a blow molding operation, where the resulting blow molding operation can be maintained in a continuous or high throughput fashion.

### SUMMARY OF THE INVENTION

Concordant and congruous with the present invention, a method of measuring and monitoring preforms during a heating thereof to minimize blowouts during a blow molding operation has surprisingly been discovered.

In an embodiment of the invention, a method for heating a preform, the method comprises the steps of providing a plurality of preforms suitable for blow molding; inspecting each preform to identify at least a material from which the preform is formed; heating each preform; measuring the temperature of at least a portion of each preform along its longitudinal axis and around its circumference; further heating each preform; further measuring the temperature of at least a portion of each preform along its longitudinal axis and around its circumference to generate a temperature profile; comparing the temperature profile from the further measuring step to a standard temperature profile of each of the plurality of preforms; and blow molding any preform that has an acceptable temperature profile based on the comparing step.

In another embodiment of the invention, a method for heating a preform, the method comprises the steps of providing a plurality of preforms suitable for blow molding; inspecting each preform to identify at least a material from which the preform is formed; heating each preform; measuring the temperature of at least a portion of each preform along its longitudinal axis and around its circumference; further heating each preform; further measuring the temperature of at least a portion of each preform along its longitudinal axis and around its circumference to generate a temperature profile; comparing the temperature profile from the further measuring step to a standard temperature profile of one of the plurality of preforms; and blow molding any preform that has an acceptable temperature profile based on the comparing step, recycling any preform that does not have an acceptable temperature profile based on the comparing step, or reheating any preform that does not have an acceptable temperature profile based on the comparing step.

In another embodiment of the invention, a method for heating a preform, the method comprises the steps of providing a plurality of preforms suitable for blow molding; inspecting each preform to identify at least a material from which the preform is formed; heating each preform; measuring the temperature of at least a portion of each preform along its longitudinal axis and around its circumference; further heating each preform; further measuring the temperature of at least a portion of each preform along its longitudinal axis and around its circumference to generate a temperature profile; compiling the measured temperatures of the at least a portion of each preform during the further measuring step; converting the compiled measured temperatures into a three-dimensional thermal image representing the measured temperatures of the at least a portion of the preform; further converting the three-dimensional thermal image into a two-dimensional thermal image representing the portion of the preform measured along its longitudinal axis and around its circumference in the further measuring step; comparing the two-dimensional thermal image from the further converting step to a standard two-dimensional thermal image corresponding to one of the plurality of preforms; and blow molding any preform that has an acceptable temperature profile based on the comparing step, recycling any preform that does not have an acceptable temperature profile based on the comparing step, or reheating any preform that does not have an acceptable temperature profile based on the comparing step.

### BRIEF DESCRIPTION OF THE DRAWINGS

The above, as well as other advantages of the present invention, will become readily apparent to those skilled in the art from the following detailed description of a preferred embodiment when considered in the light of the accompanying drawings in which:
Fig. 1 is a plan view schematically depicting an oven for the heat treatment and thermal imaging of preforms;
Fig. 2 is a sectional view of one of the heating means of Fig. 1 and including a preform heated thereby;
Fig. 3 is an exemplary three-dimensional thermal image of a heated preform and a corresponding two-dimensional thermal image derived therefrom;
Fig. 4 shows the images of Fig. 3 selectively dissected; and
Fig. 5 is a side-by-side comparison of the two-dimensional thermal image of Fig. 3 with a graphical representation of the thermal data used to generate the image.

### DETAILED DESCRIPTION OF EXEMPLARY

### EMBODIMENTS OF THE INVENTION

The following description of technology is merely exemplary in nature of the subject matter, manufacture and use of one or more inventions, and is not intended to limit the scope, application, or uses of any specific invention claimed in this application or in such other applications as can be filed claiming priority to this application, or patents issuing therefrom. Regarding methods disclosed, the order of the steps presented is exemplary in nature, and thus, the order of the steps can be different in various embodiments, including where certain steps can be simultaneously performed. "A" and "an" as used herein indicate "at least one" of the item is present; a plurality of such items can be present, when possible. Except where otherwise expressly indicated, all numerical quantities in this description are to be understood as modified by the word "about" and all geometric and spatial descriptors are to be understood as modified by the word "substantially" in describing the broadest scope of the technology. "About" when applied to numerical values indicates that the calculation or the measurement allows some slight imprecision in the value (with some approach to exactness in the value; approximately or reasonably close to the value; nearly). If, for some reason, the imprecision provided by "about" and/or "substantially" is not otherwise understood in the art with this ordinary meaning, then "about" and/or "substantially" as used herein indicates at least variations that can arise from ordinary methods of measuring or using such parameters.

Although the open-ended term "comprising," as a synonym of non-restrictive terms such as including, containing, or having, is used herein to describe and claim embodiments of the present technology, embodiments can alternatively be described using more limiting terms such as "consisting of" or "consisting essentially of." Thus, for any given embodiment reciting materials, components, or process steps, the present technology also specifically includes embodiments consisting of, or consisting essentially of, such materials, components, or process steps excluding additional materials, components or processes (for consisting of) and excluding additional materials, components or processes affecting the significant properties of the embodiment (for consisting essentially of), even though such additional materials, components or processes are not explicitly recited in this application. For example, recitation of a composition or process reciting elements A, B and C specifically envisions embodiments consisting of, and consisting essentially of, A, B and C, excluding an element D that can be recited in the art, even though element D is not explicitly described as being excluded herein.

As referred to herein, disclosures of ranges are, unless specified otherwise, inclusive of endpoints and include all distinct values and further divided ranges within the entire range. Thus, for example, a range of "from A to B" or "from about A to about B" is inclusive of A and of B. Disclosure of values and ranges of values for specific parameters (such as amounts, weight percentages, etc.) are not exclusive of other values and ranges of values useful herein. It is envisioned that two or more specific exemplified values for a given parameter can define endpoints for a range of values that can be claimed for the parameter. For example, if Parameter X is exemplified herein to have value A and also exemplified to have value Z, it is envisioned that Parameter X can have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X can have other ranges of values including 1-9, 1-8, 1-3, 1-2, 2-10, 2-8, 2-3, 3-10, 3-9, and so on.

When an element or layer is referred to as being "on," "engaged to," "connected to," or "coupled to" another element or layer, it can be directly on, engaged, connected or coupled to the other element or layer, or intervening elements or layers can be present. In contrast, when an element is referred to as being "directly on," "directly engaged to," "directly connected to" or "directly coupled to" another element or layer, there can be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. can be used herein to describe various elements, components, regions, layers and/or sections, these elements, components, regions, layers and/or sections should not be limited by these terms. These terms can be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, can be used herein for ease of description to describe one element or feature's relationship to another element(s) or feature(s) as illustrated in the figures. Spatially relative terms can be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device can be otherwise oriented (rotated 90 degrees or at other orientations) and the spatially relative descriptors used herein interpreted accordingly.

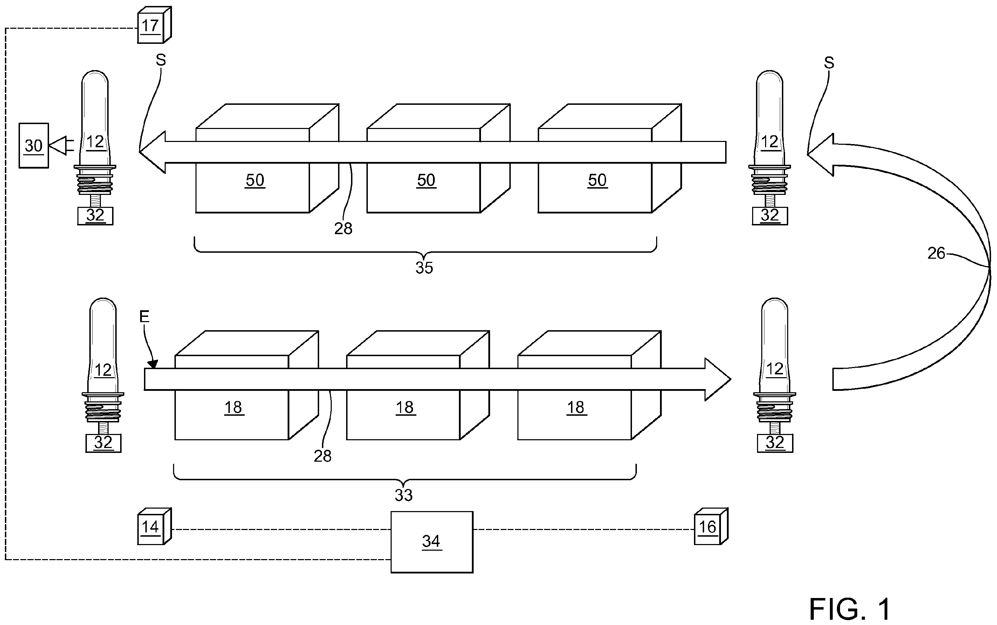

As shown in Fig. 1, the present technology is drawn to method of thermal imaging using a heating system 10 and method for optimizing preform temperature profiles and ways of using such systems, especially in blow molding a container (not shown) from a thermoplastic preform 12. The system 10, explained in more detail hereinbelow, generally includes a first camera 14, a second camera 16, and a third camera 17, and a heating means 18.

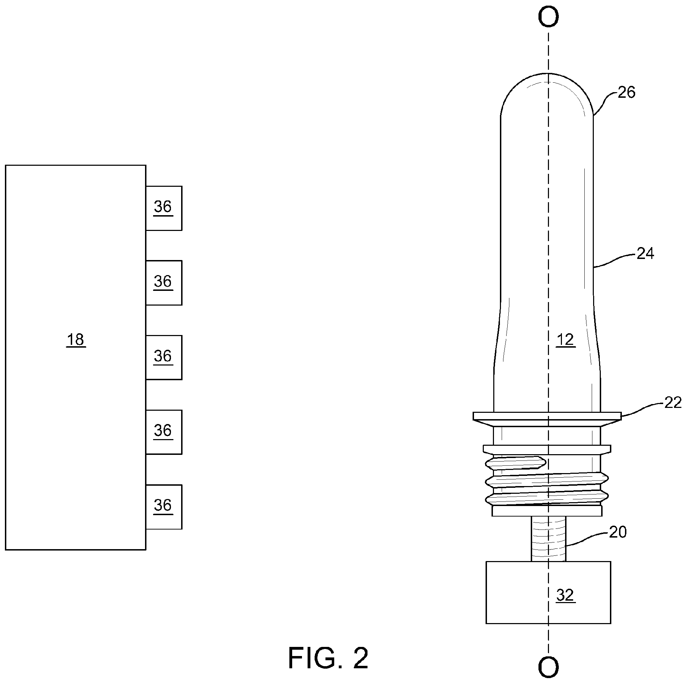

With respect to the preform 12, Fig. 2 shows an exemplary preform 12 having an elongate axis O having an overall shape resembling a test tube. The preform 12 has a neck 20, a shoulder 22, a body 24, and a rounded, closed bottom 26. Typically, the neck 20 and the shoulder 22 is each formed and in its definitive shape as it enters the system 10 and does not need to be heated or thermally imaged as contemplated herein. Accordingly, typically only the body 24 and the bottom 26 are heat treated and thermally imaged by the system 10, though the entire preform 12 may be heated, as desired. The tubular body 24 of the preform 12 is closed at an upper end by the hemispherical bottom 26 and at its lower end comprises the neck 20 which is already in the definitive shape of the neck 20 of the container, the annular shoulder 22 which extends radially outwards roughly delineates the unheated portion of the preform 12 from the heated portion thereof. The preform 12 may be formed of a polyester material, such as polyethylene terephthalate (PET) and other polyesters, polypropylene, acrylonitrile acid esters, vinyl chlorides, polyolefins, polyamides, and the like, as well as derivatives, blends, and copolymers thereof. As shown, the preform 12 has a shape well known to those skilled in the art similar to a test-tube with a generally cylindrical cross section and a length typically approximately fifty percent (50%) that of the resultant container height, or the preform 12 may have any shape, length, and formed from any material, as desired. As explained hereinabove, the heat treatment performed in the system 10 is intended at preparing the preform 12 for conversion, by blow molding with a gas or a liquid, so as to shape each preform 12 into the container.

In the system 10, each preform 12 is provided at an entrance of in-feed station E by way of a mag-lev track, rail, or other transport mechanism (not shown). The preforms 12 are then individually placed onto a conveyor 28, which transports the preforms 12 through the system 10, as detailed hereinbelow, and ultimately to an exit S of the system 10 for further processing steps 30. As discussed in further detail below, the further processing steps 30 may include transporting the preform 12 for one of re-entry into the entrance E for additional heating, rejection and recycling, or to a blow mold loading station (not shown) for forming the preform 12 into the container. It is understood that the blow molding step may be either reheat stretch blow molding process using a compressed gas, or a liquid blow molding process wherein a compressed liquid that is the ultimate contents of the container are used to form the container from the preform 12.

Each preform 12 enters the system 10 (at ambient temperature) disposed on a spindle 32 (as shown in Fig. 2) which allows for the 360° rotation thereof as the preform 12 traverses therethrough. At the entry E, each preform 12 is inspected and measured by a first camera 14. The camera 14 is a visual-inspection camera but the camera 14 may be an infrared camera or any other camera capable of measuring the desired characteristics noted herein of each preform 12. For example, the camera 14 is adapted to inspect, measure, transmit, and/or collect data concerning the preform 12 including, but not limited to, a starting (often times ambient) temperature of the preform 12, the material state (i.e., amorphous v. crystalline) of the preform 12, any inclusions (i.e., foreign materials) in the preform 12, an image of the preform 12 with a desired resolution, and the physical dimensions (e.g., height, width, diameter) of the preform 12. The camera is in electronic communication with a computer 34 and/or a process controller (not shown) and/or other data processor (not shown) capable of processing and/or tabulating the images and date from the first camera 14.

After inspection and measuring by the camera 14, each preform 12 is transported via the conveyor 28 through a first portion 33 of the system 10 having a series of heating means 18. The heating means 18 may be an infrared oven, for example, or any suitable heating means as known by one of ordinary skill in the blow molding art. Direct and/or indirect (e.g., reflected) thermal energy can be applied by the heating means 18. Multidirectional application of thermal energy can be used as well as where preforms 12 themselves are moved, spun, or rotated about various thermal radiation sources in the various heating means 18. Any number of heating means 18 may be utilized, as desired, but, as shown in Fig. 1, the system 10 includes three (3) heating means 18. As best shown in Fig. 2, each heating means 18 comprises five (5) heating elements 36 to facilitate heating of each preform 12 at different heights thereof along the longitudinal axis O. It is understood that the number of heating means 18 and the heating elements 36 present in the heating means 18, or operation thereof during a given process, may vary based on the size or specifications of each preform 12, material properties of each preform 12, and the like. The heating means 18 are spaced longitudinally along the conveyor 28 through the system 10 so as to introduce into the preforms 12 thermal energy to result in a desired temperature profile that will allow for optimization of the distribution of the plastic material during the remaining steps in a pre-stretch and blow molding process. The temperature profile may vary or define a gradient along the longitudinal axis O of each preform 12. Alternatively, the temperature profile may be constant over the length of the preforms 12. Additionally, the temperature profile may vary across the thickness of the preforms 12 with, for example, the material on the exterior of the preform 12 being at a higher temperature than the material on the interior of the preform 12. The actual temperature profile will depend on the specific design of the preform 12, including its shape and material composition, material distribution, and the design of the resulting container to be formed. As each preform 12 passes the heating means 18, each preform 12 is rotated on its spindle 32 thus being heated by the heating means 18 until each preform 12 reaches the second camera 16.

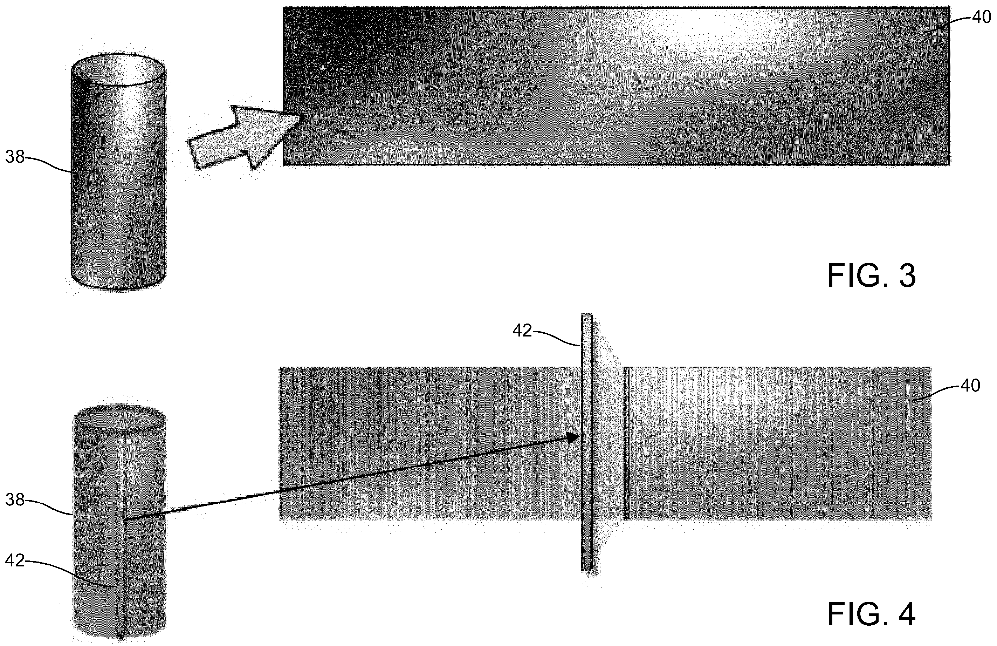

As shown in Fig. 1, the second camera 16 is an infrared camera adapted to inspect and measure the temperature of each preform 12 along the longitudinal axis O thereof and around an entire circumference thereof. The camera 16 measures a temperature of the preform 12 along its axis O and circumference at a defined and desired number of data points and/or at a desired resolution (as constrained by the camera 16). For example, data points may correspond to a height of each of the heating elements 36 and/or portions of the preform 12 therebetween along each degree of the circumference of the preform 12 and/or areas therebetween. The second camera 16 is in electronic communication with the computer 34 or other data processor (not shown) capable of processing and/or tabulating the thermal characteristics data measured by the camera 16. For example, the computer 34 converts the thermal characteristics data of the preform 12 into a three-dimensional thermal image 38 of each preform 12, as best shown in Fig. 3. The computer 34 may then convert the three-dimensional thermal image 38 into a two-dimensional thermal image 40 (also known as a heat map). Alternatively, the computer 34 may convert the thermal characteristics data directly into the two-dimensional thermal image 40. The image 40, when viewed left to right, is a representation of a temperature measurement of the preform 12 from about 0° to about 359° taken as the preform 12 rotates on the spindle 30. Thus, the temperature profile of the three-dimensional preform 12 may be viewed in two dimensions. Furthermore, the temperature profile of the preform 12 may be viewed as a whole or at desired discreet areas, for example, along a longitudinal area 42, as shown in Fig. 4. As an example and as best shown in Fig. 4, the three-dimensional thermal image 38 can be divided into a desired number of longitudinal areas such as, for example, three-hundred fifty-nine (359) longitudinal areas corresponding to each degree of the preform 12 as rotated about its axis O from about 0° to about 359°. In this way, a particular longitudinal area 42 of the three-dimensional thermal image 38 and of the preform 12 itself can be more easily and readily observed on the two-dimensional thermal image 40 without the requirement to access and/or rotate the three-dimensional thermal image 38.

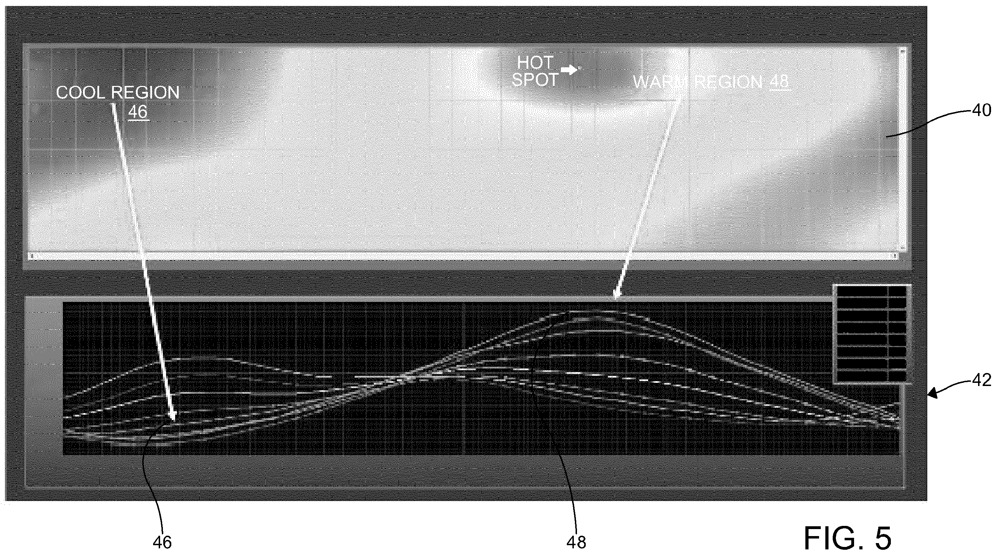

As noted above, the temperatures of the preform 12 are tabulated by the computer 34. The temperatures measured are then plotted against the position of the measurement on the preform 12, as shown in a graph 44 in Fig. 5. As shown on the graph 44, the temperature of the preform 12 at each temperature measurement taken by the camera 14 (x-axis) is plotted against the position of such measurement on the preform 12 (x-axis). In this way, the graph 44, a numerical/ graphical representation of the temperature measurements, can be readily compared and directly correlates to the two-dimensional thermal image 40, a color-based heat map.

By creating the two-dimensional thermal image 40, temperature measurements of each heated preform 12 may be readily and easily ascertained before the preform 12 is transferred to the blow molding station and molded into the final container. In some instances, the thermal images 38, 40, and/or the graph 44 may indicate that a preform 12 has "cool regions" 46 or "warm regions" 48. Such regions 48, 48 may result in blowouts during blow molding, thus requiring remedial action during the heating of the preform 12. Because the exact location of such regions 46, 48 can be pinpointed by observance and analysis of the thermal images 38, 40, and/or the graph 44, remedial action can be taken to ensure proper heating of the preform 12 to minimize blowouts during blow molding thereof into the container. The remedial action may include adjustment of one or more of process parameters and settings of the system 10, including adjustment of the heating means 16 or specific heating elements 36, to increase or decrease the temperature of any portion of the preform 12 (e.g., the regions 46, 48), as desired, so that subsequent preforms have a different and acceptable temperature profile to minimize blowouts during blow molding. Additional remedial actions include, for example, upwardly or downwardly adjusting the spin rate of the spindle 32 upon which each preform 12 is disposed, or increasing or decreasing the residence time of the preform 12 (or speed of the conveyor 28) within the system 10, and/or cooling airflow within the system 10 may be increased or decreased.

Once each preform 12 is inspected and measured by the second camera 16, the conveyor 28 transports each preform 12 to a second portion 35 of the system 10 to a series of additional heating means 50. Like the heating means 18, the heating means 50 may be an infrared oven, for example, or any suitable heating means as known by one of ordinary skill in the blow molding art. Direct and/or indirect (e.g., reflected) thermal energy can be applied by the heating means 50. Multidirectional application of thermal energy can be used as well as where preforms 12 themselves are moved, spun, or rotated about various thermal radiation sources in the various heating means 50. Any number of heating means 50 may be utilized, as desired, but, as shown in Fig. 1, the second portion 35 of the system 10 includes three (3) heating means 50. The heating means 50 are similar to those shown in Fig. 2 with each heating means 50 comprising five (5) heating elements (not shown) to facilitate heating of each preform 12 at different heights thereof along the longitudinal axis O. It is understood that the number of heating means 50 and the heating elements present in the heating means 50, or operation thereof during a given process, may vary based on the size or specifications of each preform 12, material properties of each preform 12, and the like. The heating means 50 are spaced longitudinally along the conveyor 28 through the system 10 so as to introduce into the preforms 12 thermal energy to result in a desired temperature profile that will allow for optimization of the distribution of the plastic material during the remaining steps in a pre-stretch and blow molding process. The temperature profile may vary or define a gradient along the longitudinal axis O of each preform 12. Alternatively, the temperature profile may be constant over the length of the preforms 12. Additionally, the temperature profile may vary across the thickness of the preforms 12 with, for example, the material on the exterior of the preform 12 being at a higher temperature than the material on the interior of the preform 12. The actual temperature profile will depend on the specific design of the preform 12, including its shape and material composition, material distribution, and the design of the resulting container to be formed.

As each preform 12 passes the heating means 50, each preform 12 is rotated on its spindle 32 thus being heated by the heating means 18 until each preform 12 reaches the third camera 17. As shown in Fig. 1, the third camera 17 is an infrared camera adapted to inspect and measure the temperature of each preform 12 along the longitudinal axis O thereof and around an entire circumference thereof. The camera 17 measures a temperature of the preform 12 along its axis O and circumference at a defined and desired number of data points and/or at a desired resolution (as constrained by the camera 17). For example, data points may correspond to a height of each of the heating elements 36 and/or portions of the preform 12 therebetween along each degree of the circumference of the preform 12 and/or areas therebetween. The third camera 17 is in electronic communication with the computer 34 and/or the process controller and/or other data processor (not shown) capable of processing and/or tabulating the thermal characteristics data measured by the third camera 17. For example, the computer 34 converts the thermal characteristics data of the preform 12 into images similar to those described hereinabove with respect to the second camera 16 and as shown in Figs. 3-5.

In use, the images and/or information obtained from the first camera 14 are processed by the computer 34 to determine the thermal treatment appropriate for each preform 12 is to receive from the heating means 18. For example, the first camera 14 may identify individual preforms formed from different materials or having different sizes corresponding to resulting containers having different volumes. Accordingly, each preform 12 may require its own specific thermal treatment from the heating means 18, and/or the first camera 14 may detect an unacceptable number of inclusions or other unacceptable issues with a particular preform and signal the system 10 via the computer 34 or the process controller to reject that preform and remove it for recycling or destruction. Once each preform 12 receives its thermal treatment from the heating means 18, data is gathered for each preform 12 by the second camera 16. The computer 34 compares the data for each preform 12 as received from the first camera 14 and to data received from the second camera 16 to ensure that the thermal treatment was appropriate and acceptable for the given specifications (e.g., dimensions and/or material) of the preforms 12. In this way, it can be ensured that each preform 12 enters the second portion 35 of the system for additional heat treatment by the heating means 50 at a consistent temperature and/or temperature profile regardless of the ambient conditions of the system 10 or starting conditions of the preform 12 upon entry into the entrance E of the system 10.

The computer 34 or the process controller may cause adjustments to the first portion 33 of the system 10 to ensure subsequent preforms 12 of similar specification receive an appropriate thermal treatment by, for example, increasing or decreasing the intensity of the heating means 18, upwardly or downwardly adjusting the spin rate of the spindle 32 upon which each preform 12 is disposed, or increasing or decreasing the residence time of the preform 12 (or speed of the conveyor 28) within the first portion 33 of the system 10, and/or cooling airflow within the first portion 33 of the system 10 may be increased or decreased. The computer 34 and/or the process controller will make adjustments to the first portion 33 of the system 10, as necessary, based on a comparison of images from the cameras 14, 16 and/or data from the cameras 14, 16 with respect to each preform 12. By ensuring that the thermal treatment for each preform 12 is appropriate and acceptable prior to the preform 12 being subjected to a blow molding operation (i.e., the further processing steps 30), blowouts of the preform(s) 12 are minimized and cost savings may be realized.

Furthermore, once each preform 12 receives a second thermal treatment in the second portion 35, the images 38, 40 and/or graphs 42 generated from the third camera 17 for each preform 12 may be compared by the computer 34 against a catalog, database, table, or collection of images (e.g., heat maps) and/or data points and/or graphs that correspond to a predetermined, acceptable temperature profile (separately or collectively, a "standard temperature profile") of each preform 12 of a particular material or dimension. In this way, the computer 34 can compare data for each preform 12 that passes the third camera 17 against the acceptable temperature profile of a preform of similar dimensions and/or materials to ensure that the temperature profile of each preform 12 is optimized, thereby militating against blowouts of the preform(s) 12 during the further processing steps 30.

This comparison made after each preform 12 is measured by the third camera 17 may be in the form of a comparison of an acceptable thermal image for a given preform of defined dimensions and/or materials to a thermal image, such as the two-dimensional image 40 from the third camera 17, of each preform 12 processed within the system 10; a comparison of acceptable tabulated thermal data from the third camera 17 to tabulated data of each preform 12 processed within the system 10. The comparison may also be a comparison of an acceptable graph corresponding to an acceptable temperature profile to each graph similar to the graph 42 from data from the third camera 12 of each preform 12 processed within the system 10.

By comparing thermal data and/or images of each preform 12 processed within the system 10 to a known, constant, acceptable set of thermal data and/or images, thermal treatment of preforms therethrough may be readily reproduced anywhere in the world independent of the ambient temperature of the system 10, the ambient conditions of the system 10, or the starting temperature or conditions of the preforms. Regardless of where the system 10 is located, each processed preform 12 will be observed and identified by the first camera 14, subjected to an appropriate thermal treatment corresponding to the material and/or dimensions of the preform 12 by the heating means 18 in the first portion 33; have its temperature profile obtained by the second camera 16 to ensure its starting temperature prior to entering the second portion 35 is acceptable; subjected to an appropriate thermal treatment by the heating means 50 in the second portion 35; and then have its temperature profile compared to an acceptable temperature profile by the computer 34. After the comparison, each of the preforms 12 will either align with the known, acceptable temperature profile (or within an acceptable deviation therefrom) transported for blow molding into the container, or each of the preforms 12 will deviate from the known, acceptable temperature profile and be either transported for additional thermal treatment, or rejected and recycled (collectively, the further processing steps 30). The further

By ensuring that each preform 12 has received an acceptable thermal treatment by the system 10 before being transported to the exit S by comparing each preform 12 to known, acceptable standard data, unacceptable preforms may be discarded or re-heat treated before blowouts of each preform 12 during a blow molding thereof can be minimized. For unacceptably heated preforms 12 as determined in the comparison to images generated from the third camera 17, the computer 34 or the process controller may cause adjustments to the second portion 35 of the system 10 to ensure subsequent preforms 12 of similar specification receive an appropriate thermal treatment by, for example, increasing or decreasing the intensity of the heating means 50, upwardly or downwardly adjusting the spin rate of the spindle 32 upon which each preform 12 is disposed, or increasing or decreasing the residence time of the preform 12 (or speed of the conveyor 28) within the second portion 35 of the system 10, and/or cooling airflow within the second portion 35 of the system 10 may be increased or decreased.

Once each of the preforms 12 is deemed acceptable, each preform 12 is transported to one or more systems (not shown) for blow molding the container from each preform 12. In particular, the blow molding system can include a mold (not shown) configured to receive each preform 12 and a means for delivering a pressurized fluid to a preform received in the mold to expand the preform into the container conforming to an interior surface of the mold. The pressurized fluid can be a gas (e.g., air) or can be a liquid (e.g., a product intended to remain within the resultant container). In a process where each of the preforms 12 is formed from different materials and/or has different dimensions, a transport mechanism may selectively transport each of the preforms 12 to different blow molding systems for forming a multitude of containers. That is, the present technology further contemplates sequential production of various containers derived from preforms heated to different temperature profiles, including preforms of different construction that require different heating regimens and different comparisons to different known, acceptable temperature profiles in preparation for blow molding into resultant containers; e.g., preforms of different sizes, shapes, thicknesses, formed of or including different polymers or polymer combinations, layers, etc.

Benefits and advantages of the present technology can include the following aspects. Juxtaposition and metering of multiple sizes and materials of preforms within the same system (e.g., the system 10). Selective transfer of preforms and controlled dispensing between and from the multiple heating means provides unique ways to handle different preforms and allows flexible stock-keeping unit (SKU) management. For example, the system can include one or more bar code readers to track loading positions of preforms as they enter the system from one or more loaders and are subjected to certain travels through pathways including portions of one or more heating means or differing speeds and/or residence times. The ability of flexibly treat a mix of multiple types of preforms further allows blow molding to be maintained in a continuous or high throughput fashion.

## Claims

1. A method for heating a preform (12), the method comprising the steps of:
providing a plurality of preforms (12) suitable for blow molding;
heating each preform (12); and
measuring the temperature of at least a portion of each preform (12) along its longitudinal axis and around its circumference;
the method **characterized by** the following steps:
inspecting each preform (12) to identify at least a material from which the preform (12) is formed prior to the heating step;
further heating each preform (12);
further measuring the temperature of at least a portion of each preform (12) along its longitudinal axis and around its circumference to generate a temperature profile;
comparing the temperature profile from the further measuring step to a standard temperature profile of each of the plurality of preforms (12); and
blow molding any preform (12) that has an acceptable temperature profile based on the comparing step.

2. The method of Claim 1, further comprising a step of recycling any preform (12) that does not have an acceptable temperature profile based on the comparing step or reheating any preform (12) that does not have an acceptable temperature profile based on the comparing step.

3. The method of Claim 1, furthering comprising a step of optimizing the further heating step based on the comparison step to ensure subsequent preforms (12) are heated to an acceptable temperature to minimize rejection or reheating thereof.

4. The method of Claim 3, wherein the optimizing step is an adjustment of at least one of an intensity of a heating means (18) during the heating or further heating step, a spin rate of each preform (12) during the heating or further heating step, or a residence time of the preform (12) during the heating or further heating step if the comparison.

5. The method of Claim 1, further comprising a step of compiling the measured temperatures of the at least a portion of each preform (12) during the further measuring step.

6. The method of Claim 5, further comprising a step of converting the compiled measured temperatures into a three-dimensional thermal image (38) representing the measured temperatures of the at least a portion of the preform (12).

7. The method of Claim 6, wherein the compiled temperatures are converted into a two-dimensional thermal image (40) representing the portion of the preform (12) measured along its longitudinal axis and around its circumference in the further measuring step.

8. The method of Claim 7, wherein the two-dimensional thermal image (40) is a heat map.

9. The method of Claim 8, wherein the heat map represents measurements of the circumference of the preform (12) from about 0° to about 359° of the at least a portion of the preform (12).

10. The method of Claim 7, wherein during the heating step and the further heating step the preform (12) is caused to rotate at least 360° about its longitudinal axis.

11. The method of Claim 5, further comprising a step of converting the compiled temperatures into a graphical image representing the temperatures of the least a portion of the preform (12) against a position of the measurement.

12. The method of Claim 1, wherein the inspecting step is performed by a first camera (14), the measuring step is performed by a second camera (16), and the further measuring step is performed by a third camera (17).

13. The method of Claim 12, wherein the first camera (14) is a visual-inspection camera and each of the second camera (16) and the third camera (17) is an infrared camera.

14. The method of Claim 1, wherein the plurality of preforms (12) are not all formed from the same material.

15. The method of Claim 1, wherein at least one of a starting temperature of the preform (12), the material state thereof, a presence of inclusions therein, and the physical dimensions thereof are detected during the inspecting step.

## Patentansprüche

1. Verfahren zum Erhitzen einer Vorform (12), wobei das Verfahren die Schritte umfasst:
Bereitstellen einer Vielzahl von Vorformen (12), die für das Blasformen geeignet sind;
Erhitzen jeder Vorform (12); und
Messen der Temperatur mindestens eines Abschnitts jeder Vorform (12) entlang ihrer Längsachse und um ihren Umfang herum;
wobei das Verfahren durch die folgenden Schritte gekennzeichnet ist:
Überprüfen jeder Vorform (12), um mindestens ein Material zu identifizieren, aus dem die Vorform (12) vor dem Erhitzungsschritt gebildet ist; und
weiteres Erhitzen jeder Vorform (12);
weiteres Messen der Temperatur mindestens eines Abschnitts jeder Vorform (12) entlang ihrer Längsachse und um ihren Umfang herum, um ein Temperaturprofil zu erzeugen;
Vergleichen des Temperaturprofils aus dem weiteren Messschritt mit einem Standardtemperaturprofil jeder der Vielzahl von Vorformen (12); und
Blasformen einer beliebigen Vorform (12), die basierend auf dem Vergleichsschritt ein akzeptables Temperaturprofil aufweist.

2. Verfahren nach Anspruch 1, ferner umfassend einen Schritt des Recyclings einer Vorform (12), die kein akzeptables Temperaturprofil basierend auf dem Vergleichsschritt aufweist, oder des Wiedererhitzens einer Vorform (12), die kein akzeptables Temperaturprofil basierend auf dem Vergleichsschritt aufweist.

3. Verfahren nach Anspruch 1, ferner umfassend einen Schritt des Optimierens des weiteren Erhitzungsschritts basierend auf dem Vergleichsschritt, um sicherzustellen, dass nachfolgende Vorformen (12) auf eine akzeptable Temperatur erhitzt werden, um deren Ablehnung oder Wiedererhitzung zu minimieren.

4. Verfahren nach Anspruch 3, wobei der Optimierungsschritt eine Einstellung mindestens eines von einer Intensität eines Heizmittels (18) während des Erhitzungs- oder des weiteren Erhitzungsschritts, einer Schleuderrate jeder Vorform (12) während des Erhitzungs- oder des weiteren Erhitzungsschritts oder einer Verweilzeit der Vorform (12) während des Erhitzungs- oder des weiteren Erhitzungsschritts ist, wenn der Vergleich.

5. Verfahren nach Anspruch 1, ferner umfassend einen Schritt des Zusammenstellens der gemessenen Temperaturen des mindestens einen Abschnitts jeder Vorform (12) während des weiteren Messschritts.

6. Verfahren nach Anspruch 5, ferner umfassend einen Schritt des Umwandelns der zusammengestellten gemessenen Temperaturen in ein dreidimensionales Wärmebild (38), das die gemessenen Temperaturen des mindestens einen Abschnitts der Vorform (12) darstellt.

7. Verfahren nach Anspruch 6, wobei die zusammengestellten Temperaturen in ein zweidimensionales Wärmebild (40) umgewandelt werden, das den Abschnitt der Vorform (12) darstellt, der im weiteren Messschritt entlang ihrer Längsachse und um ihren Umfang herum gemessen wurde.

8. Verfahren nach Anspruch 7, wobei das zweidimensionale Wärmebild (40) eine Wärmekarte ist.

9. Verfahren nach Anspruch 8, wobei die Wärmekarte Messungen des Umfangs der Vorform (12) von etwa 0° bis etwa 359° des mindestens einen Abschnitts der Vorform (12) darstellt.

10. Verfahren nach Anspruch 7, wobei während des Erhitzungsschritts und des weiteren Erhitzungsschritts die Vorform (12) zum Drehen um mindestens 360° um ihre Längsachse veranlasst wird.

11. Verfahren nach Anspruch 5, ferner umfassend einen Schritt des Umwandelns der zusammengestellten Temperaturen in ein grafisches Bild, das die Temperaturen des mindestens einen Abschnitts der Vorform (12) gegenüber einer Position der Messung darstellt.

12. Verfahren nach Anspruch 1, wobei der Prüfschritt von einer ersten Kamera (14), der Messschritt von einer zweiten Kamera (16) und der weitere Messschritt von einer dritten Kamera (17) durchgeführt wird.

13. Verfahren nach Anspruch 12, wobei die erste Kamera (14) eine visuelle Inspektionskamera und jede der zweiten Kamera (16) und der dritten Kamera (17) eine Infrarotkamera ist.

14. Verfahren nach Anspruch 1, wobei die Vielzahl von Vorformen (12) nicht alle aus demselben Material gebildet sind.

15. Verfahren nach Anspruch 1, wobei während des Prüfschritts mindestens eines von einer Starttemperatur der Vorform (12), ihr Materialzustand, das Vorhandensein von Einschlüssen darin und ihre physikalischen Abmessungen detektiert werden.

## Revendications

1. Procédé de chauffage d'une préforme (12), le procédé comprenant les étapes de :
fourniture d'une pluralité de préformes (12) adaptées au moulage par soufflage ;
chauffage de chaque préforme (12) ; et
mesure de la température d'au moins une partie de chaque préforme (12) le long de son axe longitudinal et autour de sa circonférence ;
le procédé étant **caractérisé par** les étapes suivantes :
l'inspection de chaque préforme (12) pour identifier au moins un matériau dont est formée la préforme (12) avant l'étape de chauffage ; et
le chauffage supplémentaire de chaque préforme (12) ;
la mesure supplémentaire de la température d'au moins une partie de chaque préforme (12) le long de son axe longitudinal et autour de sa circonférence pour générer un profil de température ;
la comparaison du profil de température de l'étape de mesure supplémentaire à un profil de température standard de chacune de la pluralité de préformes (12) ; et
le moulage par soufflage de toute préforme (12) qui présente un profil de température acceptable sur la base de l'étape de comparaison.

2. Procédé selon la revendication 1, comprenant en outre une étape de recyclage de toute préforme (12) ne présentant pas de profil de température acceptable sur la base de l'étape de comparaison ou de réchauffage de toute préforme (12) ne présentant pas de profil de température acceptable sur la base de l'étape de comparaison.

3. Procédé selon la revendication 1, comprenant en outre une étape d'optimisation de l'étape de chauffage supplémentaire sur la base de l'étape de comparaison pour s'assurer que les préformes (12) suivantes sont chauffées à une température acceptable pour réduire au minimum le rebut ou le réchauffage de celles-ci.

4. Procédé selon la revendication 3, dans lequel l'étape d'optimisation est un ajustement d'au moins un élément parmi une intensité d'un moyen de chauffage (18) pendant l'étape de chauffage ou de chauffage supplémentaire, une vitesse de rotation de chaque préforme (12) pendant l'étape de chauffage ou de chauffage supplémentaire, ou un temps de séjour de la préforme (12) pendant l'étape de chauffage ou de chauffage supplémentaire si la comparaison.

5. Procédé selon la revendication 1, comprenant en outre une étape de compilation des températures mesurées de l'au moins une partie de chaque préforme (12) pendant l'étape de mesure supplémentaire.

6. Procédé selon la revendication 5, comprenant en outre une étape de conversion des températures mesurées compilées en une image thermique tridimensionnelle (38) représentant les températures mesurées de l'au moins une partie de la préforme (12).

7. Procédé selon la revendication 6, dans lequel les températures compilées sont converties en une image thermique bidimensionnelle (40) représentant la partie de la préforme (12) mesurée le long de son axe longitudinal et autour de sa circonférence lors de l'étape de mesure supplémentaire.

8. Procédé selon la revendication 7, dans lequel l'image thermique bidimensionnelle (40) est une carte thermique.

9. Procédé selon la revendication 8, dans lequel la carte thermique représente des mesures de la circonférence de la préforme (12) d'environ 0° à environ 359° de l'au moins une partie de la préforme (12).

10. Procédé selon la revendication 7, dans lequel, pendant l'étape de chauffage et l'étape de chauffage supplémentaire, la préforme (12) est amenée à tourner sur au moins 360° autour de son axe longitudinal.

11. Procédé selon la revendication 5, comprenant en outre une étape de conversion des températures compilées en une image graphique représentant les températures de l'au moins une partie de la préforme (12) par rapport à une position de la mesure.

12. Procédé selon la revendication 1, dans lequel l'étape d'inspection est réalisée par une première caméra (14), l'étape de mesure est réalisée par une deuxième caméra (16) et l'étape de mesure supplémentaire est réalisée par une troisième caméra (17).

13. Procédé selon la revendication 12, dans lequel la première caméra (14) est une caméra d'inspection visuelle et chacune de la deuxième caméra (16) et de la troisième caméra (17) est une caméra infrarouge.

14. Procédé selon la revendication 1, dans lequel la pluralité de préformes (12) ne sont pas toutes formées du même matériau.

15. Procédé selon la revendication 1, dans lequel au moins un élément parmi une température de départ de la préforme (12), l'état de matériau de celle-ci, la présence d'inclusions dans celle-ci et les dimensions physiques de celle-ci sont détectés pendant l'étape d'inspection.
